(19) Europäisches Patentamt
European Patent Office
Office européen des brevets

(11) **EP 2 684 754 B1**

(12) **EUROPEAN PATENT SPECIFICATION**

(45) Date of publication and mention of the grant of the patent:
**17.01.2018 Bulletin 2018/03**

(21) Application number: **11857801.2**

(22) Date of filing: **31.01.2011**

(51) Int Cl.:
*B60W 20/40* (2016.01)    *B60K 6/383* (2007.10)
*B60K 6/445* (2007.10)    *B60W 20/00* (2016.01)
*B60W 30/184* (2012.01)    *B60K 6/38* (2007.10)
*B60W 10/08* (2006.01)    *F16H 37/10* (2006.01)

(86) International application number:
**PCT/JP2011/051909**

(87) International publication number:
**WO 2012/104961 (09.08.2012 Gazette 2012/32)**

(54) **HYBRID VEHICLE**

HYBRIDFAHRZEUG

VÉHICULE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2014 Bulletin 2014/03**

(73) Proprietor: **Suzuki Motor Corporation**
**Hamamatsu, Shizuoka 432-8611 (JP)**

(72) Inventors:
• **KURAMOTO, Hiroaki**
**Hamamatsu-shi**
**Shizuoka 432-8611 (JP)**

• **ITO, Yoshiki**
**Hamamatsu-shi**
**Shizuoka 432-8611 (JP)**

(74) Representative: **Hirsch & Associés**
**137, rue de l'Université**
**75007 Paris (FR)**

(56) References cited:
EP-A2- 1 160 117    EP-A2- 1 167 104
EP-A2- 1 327 547    JP-A- 10 054 263
JP-A- 2010 083 361    JP-A- 2010 132 283
US-A1- 2004 249 518

**Description**

[Technical Field]

The present invention relates to a hybrid vehicle which includes a plurality of power sources, combines the power thereof by a power transmitting mechanism including a differential gear mechanism, and inputs and outputs the power to and from a drive shaft, and particularly, to a power input and output device with a structure in which power of two motor generators is combined and is output to a drive shaft in an EV mode.

[Background Art]

Hitherto, a hybrid vehicle has been widely distributed in which an engine and two motor generators (hereinafter, referred to as MG1 and MG2) are provided, MG1 is mainly used for a power generation purpose, and MG2 is mainly used for a driving purpose. EP 1 160 117 discloses a hybrid vehicle equipped with a mechanism which outputs power generated from an engine and two motor generators to a drive shaft through a power transmitting mechanism and fixes an output shaft of the engine, the hybrid vehicle comprising: a control means for controlling the torque generated from the two motor generators when the engine is stopped, the output shaft of the engine is fixed, and the vehicle runs only by the power generated by the two motor generators. In this related art, as disclosed in Japanese Patent No. 3612873 and Japanese Unexamined Patent Application Publication No. 2007-237885, there is proposed a hybrid vehicle in which an output shaft of an engine is provided with a one-way clutch (hereinafter, referred to as OWC) that prevents a reverse rotation thereof as a mechanism for fixing the output shaft of the engine so that the output shaft rotates only in the output direction and MG1 is also used as a driving purpose in addition to MG2 in an EV (motor driving) mode when the engine is stopped.

For example, in the hybrid vehicle disclosed in Japanese Patent No. 3612873, when the temperature of MG2 becomes high in the EV mode, MG1 is also used for a driving purpose through the reaction force of OWC. Accordingly, it is possible to suppress an increase in the temperature of MG2 and to obtain drive power larger than that of a case where only MG2 is used.

[Citation List]

[Patent Literature]

[PTL 1] Japanese Patent No. 3612873
[PTL 2] Japanese Unexamined Patent Application Publication No. 2007-237885

[Summary of Invention]

[Technical Problem]

However, in the related art of Japanese Patent No. 3612873 and Japanese Unexamined Patent Application Publication No. 2007-237885, MG1 is mainly used for a driving purpose at a low vehicle speed zone (for example, a vehicle speed lower than 30 km/h in the embodiment of Japanese Patent No. 3612873) in addition to MG2, and the engine is mainly used for a driving purpose at a high vehicle speed zone (for example, a vehicle speed equal to or higher than 30 km/h in the embodiment of Japanese Patent No. 3612873) in addition to MG2. That is, in the related art, a specification is employed in which the EV running operation is not performed at the high vehicle speed zone.

Certainly, large drive power may be easily obtained by adding the engine for a driving purpose at the high vehicle speed zone. However, in a case where the EV mode region needs to be widened by the utilization as a plug-in HEV (hybrid electric vehicle), a situation may occur in which MG1 is added as a driving purpose while the engine is stopped even at the high vehicle speed zone. This is not considered in the related art.

Further, when the OWC is designed to withstand the maximum torques of both MG1 and MG2, the OWC considerably increase in size. For this reason, it is important to take the optimal balance of the allowable torque (design specification) of OWC, the target torque (control calculation) of MG1, and the target torque (control calculation) of MG2 in the actual development. However, this is not considered in the related art.

The invention is made to solve the above-described problems, and it is an object of the invention to provide a hybrid vehicle capable of reliably preventing an increase in size or a breakage of OWC by clarifying a relation of an allowable torque of OWC, a target torque of MG1, and a target torque of MG2 and of handling utilization as a plug-in HEV or the like by effectively increasing drive power in an EV mode.

[Solution to Problem]

According to the invention, there is provided a hybrid vehicle equipped with a mechanism which outputs power generated from an engine and two motor generators to a drive shaft through a power transmitting mechanism and fixes an output shaft of the engine, the hybrid vehicle including: a control means which limits a torque generated from the two motor generators so that the torque acting on the mechanism for fixing the output shaft of the engine does not exceed an upper-limit value when the engine is stopped, the output shaft of the engine is fixed, and the vehicle runs only by the power generated by the two motor generators.

[Advantageous Effects of Invention]

According to the invention, since the torque generated from two motor generators is limited so that the torque acting on the mechanism for fixing the output shaft of the engine does not exceed the upper-limit value when the engine is stopped, the output shaft of the engine is fixed, and the vehicle runs only by the power generated from two motor generators, it is possible to protect the mechanism for fixing the output shaft of the engine when the engine is stopped and the vehicle runs only by the power generated from two motor generators while preventing an increase in the size of the mechanism for fixing the output shaft of the engine.

[Brief Description of Drawings]

[Fig. 1] Fig. 1 is a system configuration of a hybrid vehicle (embodiment).
[Fig. 2] Fig. 2 is a collinear diagram of a forward advancing state by a motor generator (embodiment).
[Fig. 3] Fig. 3 is a diagram illustrating a relation between a vehicle speed and each torque of an output shaft of an engine, a one-way clutch, and two motor generators according to Embodiment A (embodiment).
[Fig. 4] Fig. 4 is a diagram illustrating a relation between a vehicle speed and each torque of an output shaft of an engine, a one-way clutch, and two motor generators according to Embodiment B (embodiment).
[Fig. 5] Fig. 5 is a diagram illustrating a relation between a vehicle speed and each torque of an output shaft of an engine, a one-way clutch, and two motor generators according to a first embodiment (embodiment).
[Fig. 6] Fig. 6 is a diagram illustrating a relation between a vehicle speed and each torque of an output shaft of an engine, a one-way clutch, and two motor generators according to a second embodiment (embodiment).
[Fig. 7] Fig. 7 is a flowchart of torque control (embodiment).

[Description of Embodiments]

Hereinafter, embodiments of the invention will be described by referring to the drawings.

Embodiments

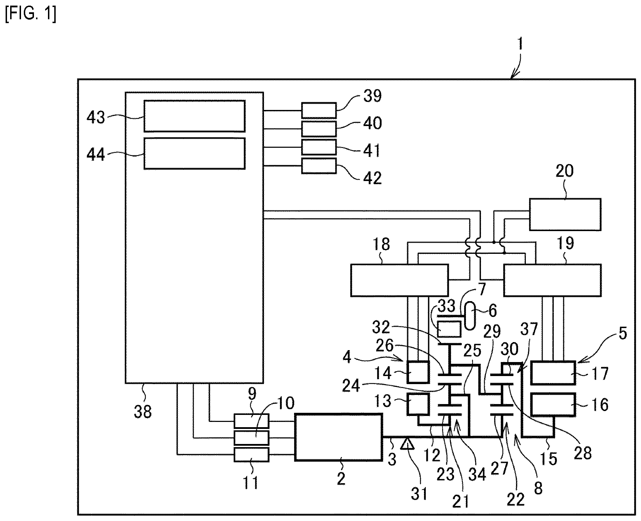

Figs. 1 to 7 illustrate embodiments of the invention. In Fig. 1, a hybrid vehicle 1 is provided. The hybrid vehicle 1 includes an output shaft 3 of an engine 2 which generates a drive power by the combustion of a fuel, first and second motor generators 4 and 5 which generate a drive power by electricity and are driven to generate electric energy, and a drive shaft 7 which is connected to a drive wheel 6 of the hybrid vehicle 1 as a driving system, and includes a differential gear mechanism 8 which is connected to each of the output shaft 3, the first motor generator 4, the second motor generator 5, and the drive shaft 7 as a power transmitting mechanism.

The engine 2 includes an air quantity adjusting means 9 which is a throttle valve, or the like, that adjusts an air intake amount corresponding to an accelerator opening degree (an accelerator stepping amount), a fuel supply means 10 which is a fuel injection valve, or the like, that supplies a fuel corresponding to the intake air amount, and an ignition means 11 which is an ignition device, or the like, that ignites a fuel. The engine 2 controls the fuel combustion state by the air quantity adjusting means 9, the fuel supply means 10, and the ignition means 11 and generates a drive power by the combustion of the fuel.

The first motor generator 4 includes a first motor rotor shaft 12, a first motor rotor 13, and a first motor stator 14. The second motor generator 5 includes a second motor rotor shaft 15, a second motor rotor 16, and a second motor stator 17. The first motor stator 14 of the first motor generator 4 is connected to a first inverter 18. The second motor stator 17 of the second motor generator 5 is connected to a second inverter 19.

The power supply terminals of the first inverter 18 and the second inverter 19 are connected to a battery 20. The battery 20 is an electricity storing means that may exchange power with the first motor generator 4 and the second motor generator 5. The electricity amounts supplied from the battery 20 to the first motor generator 4 and the second motor generator 5 are respectively controlled by the first inverter 18 and the second inverter 19. Here, the first and second motor generators generate a drive power by the supplied electricity, is driven by the drive wheel 6 in a regeneration mode so as to generate electric energy, and charges the generated electric energy to the battery 20.

The differential gear mechanism 8 includes a first planetary gear mechanism 21 and a second planetary gear mechanism 22. The first planetary gear mechanism 21 includes a first sun gear 23, a first planetary carrier 25 which supports a first planetary gear 24 meshing with the first sun gear 23, and a first ring gear 26 which meshes with the first planetary gear 24. The second planetary gear mechanism 22 includes a second sun gear 27, a second planetary carrier 29 which supports a second planetary gear 28 meshing with the second sun gear 27, and a second ring gear 30 which meshes with the second planetary gear 28.

The differential gear mechanism 8 has a configuration in which the rotation center lines of the respective rotation components of the first planetary gear mechanism 21 and the second planetary gear mechanism 22 are coaxially disposed, the first motor generator 4 is disposed between the engine 2 and the first planetary gear mechanism 21, and the second motor generator 5 is disposed so as to be away from the engine 2 in the second planetary gear mechanism 22.

The first motor rotor shaft 12 of the first motor generator 4 is connected to the first sun gear 23 of the first planetary gear mechanism 21. The first planetary carrier 25 of the first planetary gear mechanism 21 and the second sun gear 27 of the second planetary gear mechanism 22 are coupled to each other and are connected to the output shaft 3 of the engine 2 through a one-way clutch 31. The first ring gear 26 of the first planetary gear mechanism 21 and the second planetary carrier 29 of the second planetary gear mechanism 22 are coupled to each other and are connected to an output portion 32. The output portion 32 is connected to the drive shaft 7 through an output transmitting mechanism 33 such as a gear or a chain. The second motor rotor shaft 15 of the second motor generator 5 is connected to the second ring gear 30 of the second planetary gear mechanism 22.

The one-way clutch 31 is a fixation mechanism which rotates the output shaft 3 of the engine 2 only in the output direction, and prevents the reverse rotation of the output shaft 3 of the engine 2. The drive power of the first motor generator 4 is transmitted as the drive power of the output portion 32 through the reaction force of the one-way clutch 31.

The hybrid vehicle 1 outputs the power generated by the engine 2, the first motor generator 4, and the second motor generator 5 to the drive shaft 7 through the first planetary gear mechanism 21 and the second planetary gear mechanism 22, and drives the drive wheel 6. Further, the hybrid vehicle 1 transmits the drive power from the drive wheel 6 to the first motor generator 4 and the second motor generator 5 through the first planetary gear mechanism 21 and the second planetary gear mechanism 22, generates electric energy, and charges the electric energy to the battery 20.

In the differential gear mechanism 8, four rotation components 34 to 37 are set. The first rotation component 34 includes the first sun gear 23 of the first planetary gear mechanism 21. The second rotation component 35 is formed by coupling the first planetary carrier 25 of the first planetary gear mechanism 21 to the second sun gear 27 of the second planetary gear mechanism 22. The third rotation component 36 is formed by coupling the first ring gear 26 of the first planetary gear mechanism 21 to the second planetary carrier 29 of the second planetary gear mechanism 22. The fourth rotation component 37 includes the second ring gear 30 of the second planetary gear mechanism 22.

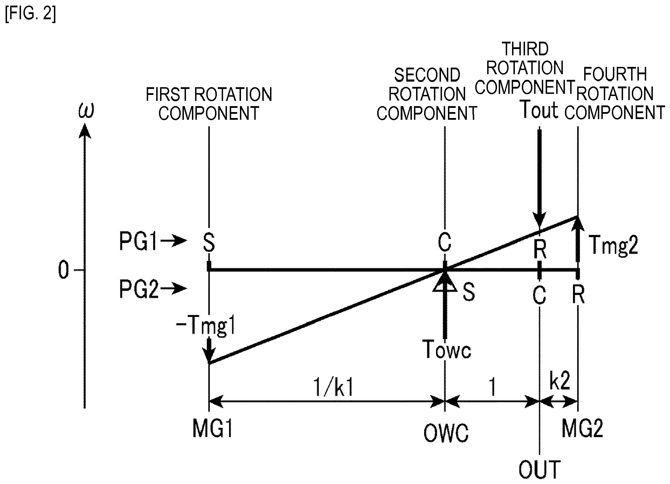

As illustrated in Fig. 2, in the differential gear mechanism 8, four rotation components 34 to 37 are sequentially set as the first rotation component 34, the second rotation component 35, the third rotation component 36, and the fourth rotation component 37 from one end (the left side of Fig. 2) toward the other end (the right side of Fig. 2) on a collinear diagram that linearly illustrating the rotation speeds of four rotation components 34 to 37.

The first motor rotor shaft 12 of the first motor generator 4 is connected to the first rotation component 34. The output shaft 3 of the engine 2 is connected to the second rotation component 35 through the one-way clutch 31. The third rotation component 36 is provided with the output portion 32, and the drive shaft 7 is connected to the output portion 32 through the output transmitting mechanism 33. The second motor rotor shaft 15 of the second motor generator 5 is connected to the fourth rotation component 37.

Accordingly, the differential gear mechanism 8 includes four rotation components 34 to 37 which are respectively connected to the output shaft 3, the first motor generator 4, the second motor generator 5, and the drive shaft 7, and transmits and receives power among the output shaft 3 of the engine 2, the first motor generator 4, the second motor generator 5, and the drive shaft 7.

In the hybrid vehicle 1, the air quantity adjusting means 9, the fuel supply means 10, the ignition means 11, the first inverter 18, and the second inverter 19 are connected to a control means 38. An accelerator opening degree detecting means 39, a vehicle speed detecting means 40, an engine rotation speed detecting means 41, and a battery charge state detecting means 42 are connected to the control means 38. The control means 38 includes an engine control means 43 and a motor control means 44.

The engine control means 43 controls the driving states of the air quantity adjusting means 9, the fuel supply means 10, and the ignition means 11 so that the engine 2 is operated at an operation point (involved with an engine rotation speed and an engine torque) with high operation efficiency determined based on the detection signals of the accelerator opening degree detecting means 39, the vehicle speed detecting means 40, and the engine rotation speed detecting means 41. Further, the motor control means 44 controls the driving sates of the first inverter 18 and the second inverter 19 so that the torque generated by the first motor generator 4 and the second motor generator 5 becomes the target torque which is determined in consideration of the charge state (SOC) of the battery 20 detected by the battery charge state detecting means 42.

The control means 38 includes at least an engine operation mode in which the vehicle runs by the power of the engine 2 or an EV (motor driving) mode in which the vehicle runs by the power of the first motor generator 4 and the second motor generator 5 as a vehicle mode, and controls the operations of the engine 2, the first motor generator 4, and the second motor generator 5 in response to each mode.

The hybrid vehicle 1 includes the one-way clutch 31 which serves as a mechanism that outputs the power generated by the engine 2 and two motor generators, the first motor generator 4 and the second motor generator 5 to the drive shaft 7 through the first planetary gear mechanism 21 and the second planetary gear mechanism 22 of the differential gear mechanism 8 as the power transmitting mechanism and fixes the output shaft 3 of the engine 2.

When the engine 2 is stopped, the output shaft 3 of the engine 2 is fixed by the one-way clutch 31, and the vehicle runs only by the power generated from two motor generators, the first motor generator 4 and the second motor generator 5, the control means 38 of the hybrid vehicle 1 limits the torque generated from two motor generators, the first motor generator 4 and the second motor generator 5 so that the torque acting on the one-way clutch 31 for fixing the output shaft 3 of the engine 2 does not exceed the upper-limit value.

In a case where the request torque may be generated only by one motor generator among two motor generators, the first motor generator 4 and the second motor generator 5, the control means 38 generates the request torque from one motor generator (for example, the second motor generator 5) and sets the torque generated from the other motor generator (for example, the first motor generator 4) to 0.

Further, in a case where the request torque may not be generated only by one motor generator, the control means 38 performs control which generates the maximum torque which may be generated from one motor generator (for example, the second motor generator 5) and generates the amount of torque to supply a deficiency from the other motor generator (for example, the first motor generator 4).

Fig. 2 is a collinear diagram according to the respective embodiments of the invention. As described above, four rotation components 34 to 37 are provided and the distance ratio of the respective components is expressed by 1/k1:1:k2.

In the description of Fig. 2, MG1 indicates the first motor generator 4, MG2 indicates the second motor generator 5, PG1 indicates the first planetary gear mechanism 21, PG2 indicates the second planetary gear mechanism 22, OWC indicates the one-way clutch 31, and OUT indicates the output portion 32. Further, in the description of Fig. 2, Tmg1 indicates the torque generated by the first motor generator 4, Tmg2 indicates the torque generated by the second motor generator 5, Towc indicates the torque acting on the one-way clutch 31, and Tout indicates the torque output from the output portion 32.

Here, the respective symbols are defined as below.

k1: PG1 planetary gear ratio (the number of teeth of the first sun gear/the number of teeth of the first ring gear)
k2: PG2 planetary gear ratio (the number of teeth of the second sun gear/the number of teeth of the second ring gear)

Since the invention relates to the EV mode of the hybrid vehicle 1, the angular velocity $\omega$ of the output shaft 3 of the engine 2 normally becomes zero.

In this case, the angular velocities $\omega$ of the other three rotation components are expressed as below.

$$\text{OUT angular velocity: } \omega_{out} = VS/Rt \cdot Gf$$

$$\text{MG1 angular velocity: } \omega_{mg1} = -\omega_{out} \times (1/k1)$$

$$\text{MG2 angular velocity: } \omega_{mg2} = \omega_{out} \times (1 + k2)$$

Here, the respective symbols are defined as below.

VS: vehicle speed

Rt: tire radius
Gf: final speed reduction ratio

Next, two typical embodiments will be described before the description of the operations of the embodiments of the invention.

The first case (hereinafter, referred to as Embodiment A) is that only the torque of the second motor generator 5 is used in the EV mode.

The second case (hereinafter, referred to as Embodiment B) is that both torques of the first motor generator 4 and the second motor generator 5 are used in the EV mode.

The hybrid vehicle 1 of the invention is positioned in the middle of these two typical embodiments, and is characterized in that in the EV mode, the torque of the second motor generator 5 is fully used and the torque of the first motor generator 4 is used while being appropriately controlled.

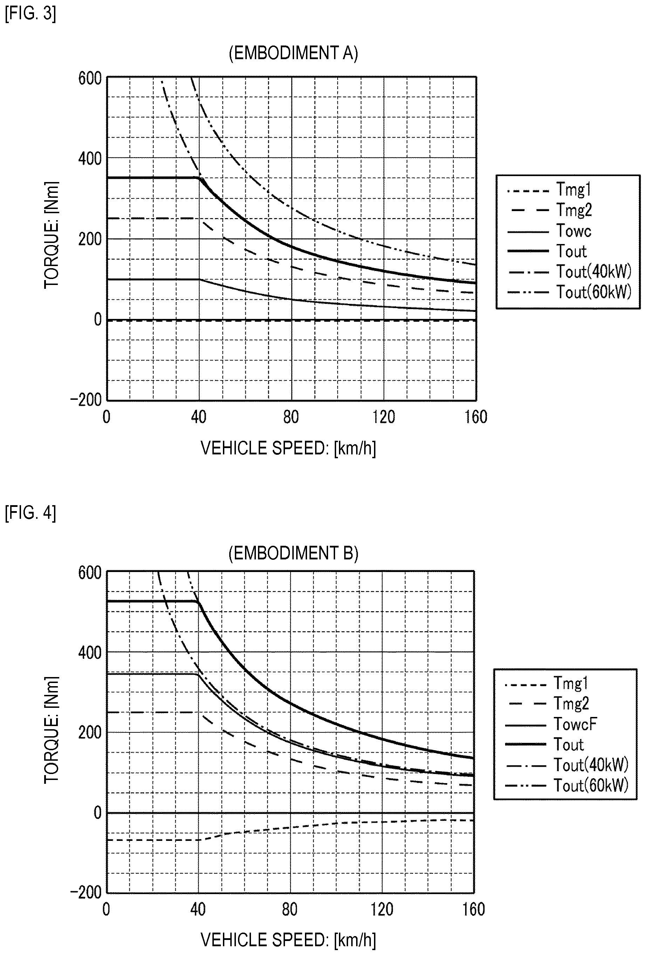

Furthermore, the graphs indicated by the drawings of Figs. 3 to 6 later are all calculated by assuming the following specifications.

$$\text{MG1 maximum power: } Pmg1max = 20 \text{ kW}$$

$$\text{MG2 maximum power: } Pmg2max = 40 \text{ kW}$$

$$\text{MG1 maximum torque: } Tmg1max = 70 \text{ Nm}$$

$$\text{MG2 maximum torque: } Tmg2max = 250 \text{ Nm}$$

k1 = 0.4
k2 = 0.4
Rt = 0.3 m
Gf = 3.0

Further, the sign of the torque is defined so that the upward arrow indicates the positive value on the collinear diagram. Here, the torque of the output portion 32 has an exception that the downward arrow indicates the positive value at the drive side. For example, in the running operation of the EV mode, the first motor generator 4 rotates reversely, but the drive side torque is set as a negative value.

Fig. 3 is a graph illustrating a relation between each torque and the vehicle speed of Embodiment A.

This is a case where only the torque of the second motor generator 5 is fully used in the EV mode, and the maximum torque curves of four rotation components 34 to 37 are expressed as below.

$$\text{MG1 torque: } Tmg1 = 0$$

$$\text{MG2 torque: } Tmg2 = \min(Pmg2max/\omega mg2, \ Tmg2max)$$

$$\text{OWC torque: } Towc = Tmg2 \times k2$$

$$\text{OUT torque: } Tout = Tmg1 + Tmg2 + Towc$$

When focusing on the torque: Tout of the output portion 32 of Fig. 3, the torque is constant at 350 Nm until the vehicle speed becomes about 40 km/h and follows the hyperbolic curve of 40 kW (the second motor generator 5: maximum power) at the vehicle speed or higher.

This means that the maximum climbing angle of 15° or more is ensured until the vehicle speed becomes about 40 km/h (on the assumption that the total weight is 1300 kg and the running resistance is 100 N as the specification of the vehicle) and the running operation of the EV mode of 40 kW may be performed at the vehicle speed or higher.

Accordingly, in this case, sufficient drive power may be ensured at the low vehicle speed zone, but the larger drive power is demanded at the middle vehicle speed zone to the high vehicle speed zone on the assumption of the utilization as the plug-in HEV.

Further, the torque: Towc acting on the one-way clutch 31 is 100 Nm at maximum, and this is a realistic range.

Fig. 4 is a graph illustrating a relation between each torque and the vehicle speed of Embodiment B.

This is a case where both torques of the first motor generator 4 and the second motor generator 5 are fully used in the EV mode, and the maximum torque curves of four rotation components 34 to 37 are expressed as below.

$$\texttt{MG1 torque: Tmg1 = max(Pmg1max/}\omega\texttt{mg1,-Tmg1max)}$$

$$\texttt{MG2 torque: Tmg2 = min(Pmg2max/}\omega\texttt{mg2, Tmg2max)}$$

$$\texttt{OWC torque: TowcF = -Tmg1} \times \texttt{(1 + 1/k1) + Tmg2} \times \texttt{k2}$$

$$\texttt{OUT torque: Tout = Tmg1 + Tmg2 + TowcF}$$

When focusing on the torque: Tout of the output portion 32 of Fig. 4, the torque is constant at 525 Nm until the vehicle speed becomes about 40 km/h and follows the hyperbolic curve of 60 kW (the first motor generator 4: maximum power + the second motor generator 5: maximum power) at the vehicle speed or higher.

This means that the maximum climbing angle of 23° or more is ensured until the vehicle speed becomes about 40 km/h and the running operation of the EV mode of 60 kW may be performed at the vehicle speed or higher.

Accordingly, in this case, the drive power from the middle vehicle speed zone to the high vehicle speed zone is attractive, but the drive power at the low vehicle speed zone is excessive.

Further, the torque: TowcF acting on the one-way clutch 31 is 345 Nm at maximum, and when a design for withstanding the torque is made, there is a concern about a remarkable increase in size and an increase in dragging loss.

Next, embodiments of the invention will be described.

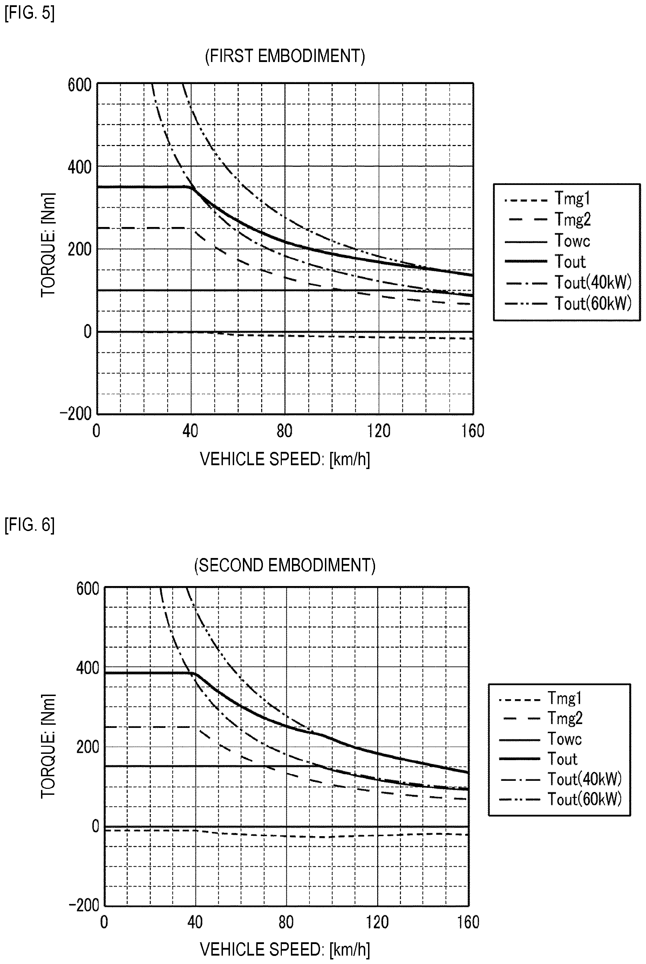

Fig. 5 is a graph illustrating a relation between each torque and the vehicle speed of the first embodiment.

This is a case in which in the EV mode, the torque of the second motor generator 5 is fully used and the first motor generator 4 is appropriately controlled and used so that the torque: Towc acting on the one-way clutch 31 does not exceed the maximum value (100 Nm) of Embodiment A, and the maximum torque curves of four rotation components 34 to 37 are expressed as below.

$$\texttt{MG2 torque: Tmg2 = min(Pmg2max/}\omega\texttt{mg2, Tmg2max)}$$

$$\texttt{OWC torque: Towc = min(TowcF, 100 Nm)}$$

$$\texttt{MG1 torque: Tmg1 = (Tmg2} \times \texttt{k2 - Towc)/(1 + 1/k1)}$$

$$\texttt{OUT torque: Tout = Tmg1 + Tmg2 + Towc}$$

When focusing on the torque: Tout of the output portion 32 of Fig. 5, the torque is constant at 350 Nm until the vehicle speed becomes about 40 km/h as in Embodiment A, follows the hyperbolic curve of 60 kW when the vehicle speed becomes about 140 km/h or higher as in Embodiment B, and gradually increases from 40 kW to 60 kW at the vehicle speed therebetween.

This means that the maximum climbing angle of 15° or more is ensured until the vehicle speed becomes about 40 km/h, the running operation of the EV mode of 40 to 60 kW may be performed when the vehicle speed becomes about 40 to 140 km/h, and the running operation of the EV mode of 60 kW may be performed when the vehicle speed becomes about 140 km/h or higher.

Accordingly, in this case, it is possible to obtain the sufficient drive power at the low vehicle speed zone and the drive power sufficiently handling the utilization as the plug-in HEV at the middle and high vehicle speed zones without changing the designed specifications of the one-way clutch 31 in Embodiment A.

Further, when the calculation equation is used, it is possible to previously set the maximum torque curve of the output portion 32 with respect to the allowable torque of the given one-way clutch 31, that is, the upper-limit curve of the target drive power and hence to perform the more reliable control.

Fig. 6 is a graph illustrating each torque and the vehicle speed of a second embodiment.

This is a case in which in the EV mode, the torque of the second motor generator 5 is fully used and the first motor generator 4 is appropriately controlled and used so that the torque: Towc acting on the one-way clutch 31 does not exceed an arbitrary design value equal to or larger than the maximum value (100 Nm) of Embodiment A and equal to or less than the maximum value (345 Nm) of Embodiment B, and the maximum torque curves of four rotation components 34 to 37 are expressed as below.

$$\text{MG2 torque: Tmg2} = \min(\text{Pmg2max}/\omega\text{mg2, Tmg2max})$$

$$\text{OWC torque: Towc} = \min(\text{TowcF, Towcmax})$$

$$\text{MG1 torque: Tmg1} = (\text{Tmg2} \times \text{k2} - \text{Towc})/(1 + 1/\text{k1})$$

$$\text{OUT torque: Tout} = \text{Tmg1} + \text{Tmg2} + \text{Towc}$$

(in Fig. 6, the allowable torque of the one-way clutch 31 is set as Towcmax = 150 Nm.)

When focusing on the torque: Tout of the output portion 32 of Fig. 6, the torque is constant at 385 Nm until the vehicle speed becomes about 40 km/h, follows the hyperbolic curve of 60 kW when the vehicle speed becomes about 95 km/h or higher, and gradually increases from about 44 kW to 60 kW at the vehicle speed therebetween.

This means that the maximum climbing angle of 17° or more is ensured until the vehicle speed becomes about 40 km/h, the running operation of the EV mode of 44 to 60 kW may be performed when the vehicle speed becomes about 40 to 95 km/h, and the running operation of the EV mode of 60 kW may be performed when the vehicle speed becomes about 95 km/h or higher.

Accordingly, in this case, when the allowable torque of the one-way clutch 31 is designed to be slightly large with respect to the first embodiment, it is possible to obtain the more sufficient drive power at the low vehicle speed zone and to obtain the more sufficient drive power even in the middle and high vehicle speed zones.

Further, when the calculation equation is used, it is possible to set the allowable torque of the one-way clutch 31 optimal for the given vehicle specification, and to previously set the maximum torque curve of the output portion 32 with respect to the allowable torque of the one-way clutch 31, that is, the upper-limit curve of the target drive power. Accordingly, the more reliably control may be performed.

Furthermore, even in any of the first and second embodiments, a case has been described in which the torque of the second motor generator 5 is fully used. However, the target drive power may be attained in a manner such that the torque of the second motor generator 5 is limited and the torque of the first motor generator 4 is supplemented by the limited amount.

In this case, the relation between the torque decrease amount: Tmg2N↓ of the second motor generator 5 and the torque increase amount: Tmg1↑ of the first motor generator 4 is expressed as below.

$$\text{Tmg1}\uparrow/\text{Tmg2}\downarrow = -(1 + \text{k2})/\text{k1}$$

(Regarding the negative sign, the drive side torque in the reverse rotation of the first motor generator 4 is defined as a negative value as described above.)

For example, in a case where the torque Tmg2 generated by the second motor generator 5 needs to be decreases by 10 Nm, the torque Tmg1 generated by the first motor generator 4 may be increased by 10 Nm x (1 + 0.4)/0.4 = 35 Nm.

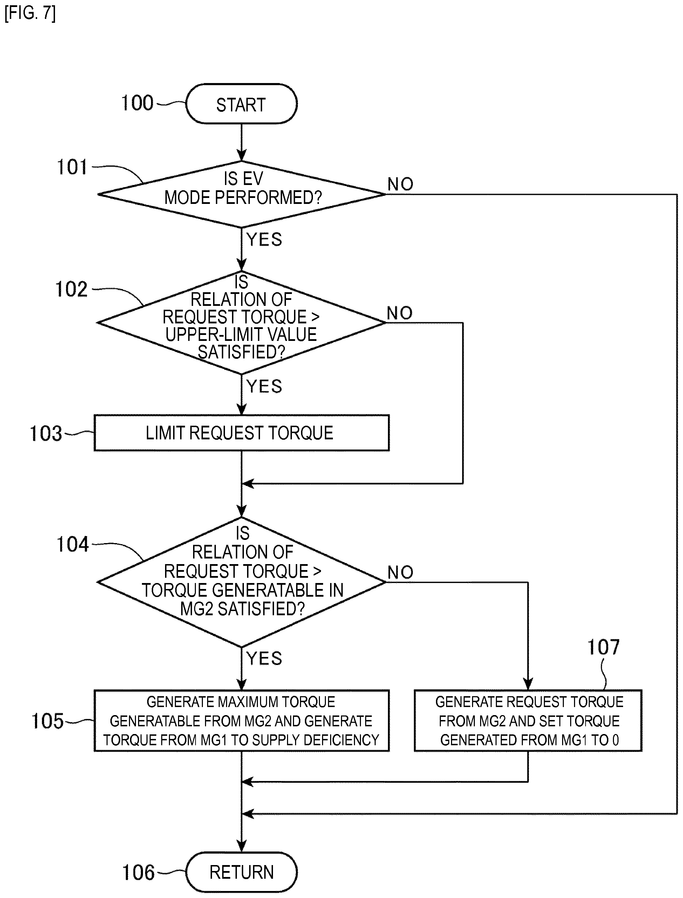

Fig. 7 is a flowchart of the torque control.

In Fig. 7, when the control starts (100), the control means 38 determines whether the vehicle mode is the EV mode (the mode in which the engine 2 is stopped, the output shaft 3 of the engine 2 is fixed to the one-way clutch 31, and the vehicle runs only by the power generated from two motor generators, the first motor generator 4 and the second motor generator 5) (101). When this determination (101) is YES, the routine proceeds to step 102. When this determination (101) is NO, the routine proceeds to step 106 for return.

In step 102, it is determined whether the request torque exceeds the upper-limit value of the torque acting on the one-way clutch 31. When this determination (102) is YES, the request torque is limited (103), and the routine proceeds to step 104. When this determination (102) is NO, the routine proceeds to step 104.

In step 104, it is determined whether the request torque exceeds the torque which may be generated by the second motor generator 5. When this determination (104) is YES, the maximum torque which may be generated from the second motor generator 5 is generated, the amount of the torque to supply a deficiency is generated from the first motor generator 4 (105), and the routine proceeds to return (106). When this determination (104) is NO, the request torque is generated from the second motor generator 5, the torque generated from the first motor generator 4 is set to 0 (107), and the routine proceeds to return (106).

In this way, according to the hybrid vehicle 1 of the invention, since the control means 38 limits the torques generated from two motor generators, the first motor generator 4 and the second motor generator 2 so that the torque acting on the one-way clutch 31 for fixing the output shaft 3 of the engine 2 does not exceed the upper-limit value at the EV mode in which the engine 2 is stopped, the output shaft 3 of the engine 2 is fixed, and the vehicle runs only by the power generated from two motor generators, the first motor generator 4 and the second motor generator 5, it is possible to protect the one-way clutch 31 for fixing the output shaft 3 of the engine 2 when the engine 2 is stopped and the vehicle runs only by the power generated from two motor generators, the first motor generator 4 and the second motor generator 5 while preventing an increase in the size of the one-way clutch 31 for fixing the output shaft 3 of the engine 2.

In a case where the request torque may be generated by only one motor generator among two motor generators, the first motor generator 4 and the second motor generator 5, the control means 38 generates the request torque from one motor generator (for example, the second motor generator 5), and sets the torque generated from the other motor generator (for example, the first motor generator 4) to 0. Further, in a case where the request torque may not be generated only by one motor generator, the control means 38 performs control which generates the maximum torque that may be generated from one motor generator (for example, the second motor generator 5) and generates the amount of the torque to supply a deficiency from the other motor generator (for example, the first motor generator 4).

Accordingly, the hybrid vehicle 1 may minimize the torque acting on the one-way clutch 31 for fixing the output shaft 3 of the engine 2. Further, the hybrid vehicle 1 may increase the sum of the torques generated from two motor generators, the first motor generator 4 and the second motor generator 5 when the allowable torque of the one-way clutch 31 for fixing the output shaft 3 of the engine 2 is equal.

Further, the hybrid vehicle 1 includes the one-way clutch 31 connected to the output shaft 3 of the engine 2 as a mechanism for fixing the output shaft 3 of the engine 2, and may easily fix the output shaft 3 of the engine 2. Furthermore, the mechanism for fixing the output shaft 3 of the engine 2 is not limited to the one-way clutch 31, and a brake mechanism may be also employed.

[Industrial Applicability]

The invention may be used to protect the mechanism for fixing the output shaft of the engine when the engine is stopped and the vehicle runs only by the power generated from two motor generators while preventing an increase in the size of the mechanism for fixing the output shaft of the engine, and may be applied to the power transmitting system of the hybrid vehicle.

[Reference Signs List]

1    hybrid vehicle
2    engine
3    output shaft
4    first motor generator
5    second motor generator
7    drive shaft
8    differential gear mechanism
18    first inverter
19    second inverter
20    battery

| | |
|---|---|
| 21 | first planetary gear mechanism |
| 22 | second planetary gear mechanism |
| 31 | one-way clutch |
| 32 | output portion |
| 38 | control means |
| 39 | accelerator opening degree detecting means |
| 40 | vehicle speed detecting means |
| 41 | engine rotation speed detecting means |
| 42 | battery charge state detecting means |
| 43 | engine control means |
| 44 | motor control means |

**Claims**

1. A hybrid vehicle (1) equipped with a mechanism which outputs power generated from an engine (2) and two motor generators (4,5) to a drive shaft (7) through a power transmitting mechanism and fixes an output shaft (3) of the engine (2), the hybrid vehicle (1) comprising:

   a control means (38) which limits a torque generated from the two motor generators (4,5) so that the torque acting on the mechanism for fixing the output shaft (3) of the engine (2) does not exceed an upper-limit value when the engine (2) is stopped, the output shaft (3) of the engine (2) is fixed, and the vehicle runs only by the power generated by the two motor generators (4,5).

2. The hybrid vehicle (1) according to claim 1, wherein the control means (38) performs control which generates a request torque from one motor generator and sets a torque generated from the other motor generator to 0 when the request torque is able to be generated by only one motor generator and performs control which generates a maximum torque generated from one motor generator and generates an amount of a torque to supply a deficiency from the other motor generator when the request torque is not able to be generated only by one motor generator.

3. The hybrid vehicle (1) according to claim 1 or 2, wherein the mechanism which fixes the output shaft (3) of the engine (2) is a one-way clutch (31) connected to the output shaft (3) of the engine (2).

**Patentansprüche**

1. Ein Hybridfahrzeug (1) das mit einem Mechanismus ausgestattet ist, der eine, von einem Motor (2)und zwei Motorgeneratoren (4, 5) erzeugte Leistung durch einen Kraftübertragungsmechanismus an eine Antriebswelle (7) ausgibt und eine Abtriebswelle (3) des Motors (2) befestigt, wobei das Hybridfahrzeug (1) Folgendes umfasst:

   - eine Steuereinrichtung (38) die einen, von den zwei Motorgeneratoren (4, 5) erzeugten Drehmoment begrenzt, so dass der Drehmoment, der auf den Mechanismus einwirkt, welcher die Abtriebswelle (3) des Motors (2) befestigt, einen oberen Grenzwert nicht überschreitet wenn der Motor (2) abgeschaltet wird, wobei die Abtriebswelle (3) des Motors (2) befestigt ist, und das Fahrzeug nur durch die, von den beiden Motorgeneratoren (4, 5) erzeugte Leistung fährt.

2. Das Hybridfahrzeug (1) nach Anspruch 1, wobei die Steuereinrichtung (38) eine Steuerung durchführt, die einen Anforderungsdrehmoment von einem Motorgenerator erzeugt und den vom anderen Motorgenerator erzeugten Drehmoment auf 0 stellt wenn der Anforderungsdrehmoment nur von einem Motorgenerator erzeugt werden kann, und eine Steuerung durchführt, die einen maximalen, von einem Motorgenerator erzeugten Drehmoment und eine Drehmomentmenge erzeugt, um einen Versorgungsmangel des anderen Motorgenerators zu beheben wenn der Anforderungsdrehmoment nicht nur von einem Motorgenerator erzeugt werden kann.

3. Das Hybridfahrzeug (1) nach Ansprüchen 1 oder 2, wobei der Mechanismus, der die Abtriebswelle (3) des Motors (2) befestigt, eine Einwegkupplung ist (31), die mit der Abtriebswelle (3) des Motors (2) verbunden ist.

**Revendications**

1.  Un véhicule hybride (1) équipé d'un mécanisme qui délivre la puissance générée par un moteur thermique (2) et deux moteur-générateurs (4, 5) à un arbre d'entraînement (7) par l'intermédiaire d'un mécanisme de transmission de puissance et qui fixe un arbre de sortie (3) du moteur thermique (2), le véhicule hybride (1) comprenant :

    un moyen de commande (38) qui limite un couple généré par les deux moteur-générateurs (4, 5) de sorte que le couple agissant sur le mécanisme de fixation de l'arbre de sortie (3) du moteur thermique (2) ne dépasse pas une valeur limite supérieure lorsque le moteur thermique (2) est arrêté, l'arbre de sortie (3) du moteur thermique (2) est fixe, et le véhicule ne fonctionne que par la puissance générée par les deux moteur-générateurs (4, 5).

2.  Le véhicule hybride (1) selon la revendication 1,
    dans lequel les moyens de commande (38) effectuent un contrôle qui génère une demande de couple de la part d'un moteur-générateur et qui règle un couple généré par l'autre moteur-générateur à 0 lorsque le couple demandé peut être généré par un seul des moteur-générateurs et effectue un contrôle destiné à générer un couple maximal généré par l'un des moteur-générateurs et génère une valeur de couple pour combler une insuffisance de la part de l'autre moteur-générateur lorsque le couple demandé ne peut pas être généré uniquement par un parmi les moteur-générateurs.

3.  Le véhicule hybride (1) selon la revendication 1 ou 2,
    dans lequel le mécanisme qui fixe l'arbre de sortie (3) du moteur thermique (2) est un embrayage unidirectionnel (31) relié à l'arbre de sortie (3) du moteur thermique (2).

[FIG. 1]

[FIG. 2]

[FIG. 3]

(EMBODIMENT A)

[FIG. 4]

(EMBODIMENT B)

[FIG. 5]

(FIRST EMBODIMENT)

[FIG. 6]

(SECOND EMBODIMENT)

[FIG. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1160117 A
- JP 3612873 B

- JP 2007237885 A